# EUROPÄISCHE PATENTSCHRIFT

(11) **EP 0 967 864 B1**
(45) Veröffentlichungstag und Bekanntmachung des Hinweises auf die Patenterteilung: **03.04.2002**
(21) Anmeldenummer: 98901343.8
(22) Anmeldetag: 07.01.1998
(51) Int. Cl.: A01N 25/30

(54) **SCHAUMARME TENSIDKONZENTRATE FÜR DEN EINSATZ IM BEREICH DER FÖRDERUNG DES PFLANZENWACHSTUMS**
LOW-FOAM SURFACTANT CONCENTRATES FOR USE IN THE DOMAIN OF PLANT GROWTH STIMULATION
TENSIOACTIFS CONCENTRES A FAIBLE POUVOIR MOUSSANT S'UTILISANT DANS LE DOMAINE DE LA CROISSANCE DES PLANTES

(30) Priorität: 15.01.1997 DE 19701127
(43) Veröffentlichungstag der Anmeldung: 05.01.2000
(73) Patentinhaber: Cognis Deutschland GmbH, 40589 Düsseldorf (DE)
(72) Erfinder: HEROLD, Claus-Peter, D-40822 Mettmann (DE); VON TAPAVICZA, Stephan, D-40699 Erkrath (DE); MÜLLER, Heinz, D-40789 Monheim (DE); BOETTCHER, Heinz, D-40699 Erkrath (DE)
(86) Internationale Anmeldenummer: EP9800052
(87) Internationale Veröffentlichungsnummer: WO9831222

(56) Entgegenhaltungen:
- WO-A-93/22917
- DE-A- 4 428 269
- DE-A- 19 548 314

## Beschreibung

Es ist bekannt, daß die scheinbar einfache Maßnahme der Bewässerung von Erdreichflächen, die insbesondere mit einem dichten Pflanzenbewuchs ausgerüstet sind, beträchtliche Schwierigkeiten machen kann. Ein typisches Beispiel sind hier durch Begehung und/oder Befahren anteilsweise beanspruchte Grasflächen, die der regelmäßigen Pflege unterliegen. So ist es beispielsweise aus der Pflege von Golfplätzen oder anderen vergleichbaren Sportplätzen und Spielwiesen bekannt, daß trotz regelmäßiger Bewässerung kleinere oder auch größere Bereiche des Rasens austrocknen können. Beim Versuch der Befeuchtung dieser Stellen dringt das Wasser nicht tief in den Boden und insbesondere nicht in den Wurzelbereich der Gräser ein. Verantwortlich kann dafür einerseits der sogenannte Rasenfilz sein der schon oberhalb der Erdreichoberfläche das Beregnungswasser vom Wurzelbereich ableitet, so daß die entsprechenden Pflanzenbereiche durch Übertrocknung unterernährt, flachwurzelnd und krank werden.

Aber auch die gleichmäßige Verteilung des Wassers beim Erreichen der Erdreichoberfläche kann Schwierigkeiten bereiten. Eine homogene Spreitung des aufgetragenen Wassers, insbesondere in den Bereich der jeweiligen Pflanzenwurzelzone, findet häufig nicht statt. Das aufgebrachte Wasser versickert vielmehr in räumlich eingegrenzten Strömen in tiefere Erdreichschichten, so daß auch hier die zuvor angegebenen Schäden auftreten. Zusätzliche Schwierigkeiten können beim Vorliegen von Bodenverdichtungen eintreten, die besonders in den befahrenen und/oder betretenen Flächen nicht zu vermeiden sind. Der hier dargestellte Problembereich betrifft dabei nicht nur den Vorgang der Bewässerung. Begreiflicherweise gelten entsprechende Schwierigkeiten für den Eintrag von Nährstoffen und/oder Schutzstoffen in möglichst gleichmäßiger Verteilung in den Bereich der Pflanzenwurzel.

Es ist bekannt, den hier angesprochenen Problembereich dadurch besser zu bewältigen, daß dem zur Beregnung eingesetzten Wasser und/oder den wäßrigen Wertstoffzubereitungen Hilfsstoffe mit Netzmittelcharakter zugesetzt werden, die die Oberflächenspannung des Wassers in an sich bekannter Weise herabsetzen und auf diese Weise eine bessere Spreitung der wäßrigen Phase im gesamten Bodenbereich und damit insbesondere auch im Bereich der Pflanzenverwurzelung sicherstellen. Bei der Pflege von Sportplätzen, von Golfanlagen, aber auch im Bereich des Schutzes sonstiger Grünanlagen wird hiervon praktischer Gebrauch gemacht.

Die Erfindung geht von der Aufgabe aus, die Homogenisierung, Intensivierung und Kontrolle des Wassereintrags in insbesondere dicht bewachsene Erdreichflächen unter Einsatz eines ganz bestimmten Netzhilfsmittels mit O/W-Tensidcharakter zu verwirklichen. Die erfindungsgemäße Lehre will dabei insbesondere entsprechende schaumarme Netzhilfen in der Angebotsform hochkonzentrierter wäßriger Konzentrate zur Verfügung stellen, die für den praktischen Einsatz in einfacher Form mit dem Beregnungswasser abgemischt werden können.

WO-A-93/22917 offenbart ein Spreitmittel für Pestizidformulierungen das in wäßriger Formappliziert wird und APG und Fettalkohole enthält. Das Imprägniermittel zur Erdreichverfestigung gemaß DE-A-44 28 269 enthält ein Polyvinylacetat und ggf. Fettalkohole und APG.

### Gegenstand der Erfindung

Erfindungsgegenstand ist dementsprechend in einer ersten Ausführungsform eine schaumarme Netzhilfe in der Angebotsform eines hochkonzentrierten, gleichwohl fließ- und gießfähigen wäßrigen Konzentrats auf Tensidbasis zur Intensivierung des Eindringens und Spreitens von Wasser im Bereich der Pflanzenverwurzelung bei deren Bewässerung. Die erfindungsgemäßen wäßrigen Konzentrate enthalten als ökologisch verträgliche Tensidkomponente Alkyl(poly)glykosidverbindungen vom O/W-Typ - im nachfolgenden auch als "APG"-Verbindungen bezeichnet. Zusammen mit diesen Tensidkomponenten vom APG-Typ enthält das erfindungsgemäße wäßrige Konzentrat olefinisch ungesättigte Alkohole, gegebenenfalls in Abmischung mit Partialestern von Fettsäuren mit mehrfunktionellen Alkoholen als Schaumbremse/Entschäumer und schließlich zusätzlich C1-4 wasserlösliche monofunktionelle Alkohole als Viskositätsregler.

### Einzelheiten zur erfindungsgemäßen Lehre

Ein erstes wichtiges Bestimmungselement für die erfindungsgemäße Lehre liegt in der Auswahl einer ganz bestimmten Stoffklasse als Netzmittel mit O/W-Tensidcharakter. Es handelt sich hierbei um die Klasse der Alkyl(poly)glykosidverbindungen (APG-Komponenten bzw. -Verbindungen), die an sich in einem ganz anderen technischen Bereich heute in großem Umfange praktische Verwendung finden. APG-Verbindungen sind tensidische Hilfsstoffe des Bereiches der Wasch- und Reinigungsmittel, einschließlich der Textilwaschmittel. Für ihren heute im großtechnischen Maßstab stattfindenden Einsatz in der Praxis sind eine Mehrzahl von Faktoren wichtig: Netzmittel auf APG-Basis können bekanntlich voll naturstoffbasiert sein. Sie fallen bekanntlich als Reaktionsprodukte durch Umsetzung von Fettalkoholen mit Glukose, Oligoglukosen oder auch - bei gleichzeitigem Abbau der Kettenlänge - mit Polyglykosiden wie Stärke als Reaktionsprodukte der allgemeinen Formel R - O - (G)ₓ an, in der R einen primären, bevorzugt geradkettigen und aliphatischen Kohlenwasserstoffrest mit insbesondere 8 bis 18 C-Atomen bedeutet und G für eine Glykoseeinheit mit 5 oder 6 C-Atomen, vorzugsweise für Glukose steht. Der Oligomerisierungsgrad x, der die Verteilung von Monoglykosiden und Oligoglykosiden angibt, ist in der hier betroffenen Tensidklasse üblicherweise ein Wert zwischen 1 und 10 und liegt beispielsweise im Bereich von etwa 1,2 bis 4, vorzugsweise im Bereich von etwa 1,2 bis 2. Auf das umfangreiche Fachwissen und Schrifttum zur Herstellung und Beschaffenheit von APG-Verbindungen der hier betroffenen Art kann verwiesen werden.

Die Anmelderin schildert in ihrer älteren Anmeldung gem. DE-A 195 48 340 ein modifiziertes Verfahren zur Oberflächenverfestigung errosionsgefährdeten Erdreichs, bei dem zur Intensivierung der Oberflächenverfestigung die Erdreichimprägnierung mehrstufig ausgebildet wird und dabei in der ersten Imprägnierstufe eine wäßrige Zubereitung eingesetzt wird, die biologisch verträgliche Netzmittel zur Beschleunigung und/oder Intensivierung der Erdreichbenetzung mit wäßriger Phase enthält. Bevorzugte Netzmittel sind dabei nichtionische Netzhilfen mit HLB-Werten von wenigstens 7, vorzugsweise gleich/größer 8 und insbesondere des Bereichs von 10 bis 18. Eine besonders geeignete Klasse von biologisch verträglichen Netzmitteln dieser Art sind die jetzt auch durch die vorliegende Lehre der Erfindung betroffenen APG-Verbindungen. Im Rahmen dieser Arbeiten zur genannten älteren Anmeldung hat sich herausgestellt, daß APG-basierte Netzhilfen nicht nur in dem Bereich der Erdreichverfestigung besonders wertvolle Arbeitsmittel sind, es hat sich gezeigt, daß durch ihren Einsatz Wachstum und Pflege eines bereits bestehenden Pflanzenbewuchses in unerwartet starkem Ausmaß gefördert werden.

Von dieser Erkenntnis ausgehend stellte sich für die Erarbeitung der erfindungsgemäßen Lehre die zusätzliche Aufgabe eine Angebotsform des APG-basierten Netzhilfsmittels zur Verfügung zu stellen, das den vielgestaltigen Anforderungen der Praxis in Summe entspricht. Ohne Anspruch auf Vollständigkeit gilt hier: Das für den Einsatz im Bereich der Wasch- und Reinigungsmittel vom Verbraucher gewünschte hohe Schaumvermögen der niotensidischen Hilfsmittel auf APG-Basis ist für das erfindungsgemäß betroffene Arbeitsgebiet nicht nur unerwünscht, es kann eine ausgesprochene Belastung darstellen. Sogenannte Schaumbremsen unterschiedlichster Art sind im Bereich der Wasch- und Reinigungsmittel bekannt, für das erfindungsgemäße Arbeitsgebiet stellte sich hier aber die zusätzliche Aufgabe einen Entschäumer zu finden bzw. auszuwählen, der voll biologisch verträglich ist und das Pflanzenwachstum nicht behindert, bevorzugt im Gegenteil sogar fördert. Die erfindungsgemäße Wertstoffkombination sollte gleichzeitig in Form leicht mit Wasser verdünnbarer Konzentrate angeboten werden können, wobei zusätzlich die ausreichende Portionierbarkeit des Konzentrats auch im Bereich von Normaltemperaturen sicherzustellen war.

Die erfindungsgemäße Lehre basiert auf der Erkenntnis, daß ausgewählte Alkohole der nachfolgend näher definierten Art wirkungsvolle Schaumbremsen beim Einsatz von tensidischen APG-Verbindungen sein können. Die Abmischung wäßriger APG-Konzentrate mit den Schaumbremsen/Entschäumern auf Alkoholbasis führt allerdings zu nicht mehr fließfähigen eingedickten Gelen. Im Rahmen der Entwicklung der erfindungsgemäßen Lehre wurde dann festgestellt, daß der Zusatz begrenzter Mengen niederer monofunktioneller Alkohole und insbesondere der Zusatz begrenzter Mengen an Ethanol zum APG-Fettalkoholkonzentrat auch im Bereich der Raumtemperatur die Fließ- und Gießfähigkeit wieder eröffnet bzw. sicherstellt.

Die Lehre der Erfindung betrifft dementsprechend in einer ersten Ausführungsfom die geschilderten Konzentrate der drei Wert- bzw. Hilfsstoffe: Netzmittelkomponente vom O/W-Typ auf APG-Basis, Schaumbremse/Entschäumer auf Basis olefinisch ungesättigter Alkohole und niedere wasserlösliche Alkohole als Viskositätsregler. Im einzelnen gilt zu diesen Komponenten und ihren bevorzugten Mengenbereichen:

Bevorzugte APG-Komponenten enthalten Alkylreste auf Basis wenigstens weitgehend gesättigter sogenannter Vorlauf-Fettalkohole, d.h. auf Basis von Fettalkoholen mit 8 bis 14 und insbesondere 8 bis 12 C-Atomen. Besonders bevorzugte APG-Komponenten für den erfindungsgemäßen Einsatz sind Umsetzungsprodukte von C_{8/10}-Fettalkoholen und Glukose, Oligoglukosen und/oder Polyglykosen. Der sogenannte DP-Wert (Durchschnittlicher Polymerisationsgrad bzw. Oligomerisationsgrad x in der oben angegebenen Formel) liegt auch hier im Bereich von 1 bis 10 und vorzugsweise im Bereich von 1 bis 5, insbesondere im Bereich von etwa 1,2 bis 4.

Die in den erfindungsgemäßen Netzhilfekonzentraten eingesetzten Mengen an APG-Komponente - bestimmt als wasserfreie Aktivsubstanz - liegen üblicherweise bei wenigstens 15 Gew.-%, vorzugsweise im Bereich von wenigstens 20 Gew.-%. Der obere Grenzbereich für den APG-Gehalt liegt dabei im Rahmen dieser Definition bei etwa 35 bis 40 Gew.-%, wobei APG-Gehalte (wasserfreie Aktivsubstanz) im Bereich von etwa 25 bis 30 Gew.-% besonders bevorzugt sein können.

Als Schaumbremse/Entschäumer sind olefinisch ungesättigte Alkohole geeignet, die vorzugsweise zwischen 4 und insbesondere zwischen 8 und 28 C-Atomen enthalten. Insbesondere sind olefinisch ungesättigte Fettalkohole des Bereichs C₁₂₋₂₄ geeignet, wobei hier entsprechenden Fettalkoholen natürlichen Ursprungs besondere Bedeutung zukommt. Innerhalb dieser Klasse sind wiederum solche Fettalkohole bzw. Fettalkoholgemische mit hohem Grad olefinischer Doppelbindungen besonders bevorzugte Mischungskomponenten, die sich zum wenigstens überwiegenden Anteil dem Bereich der C_{16/18}-Fettalkohole zuordnen. Das Ausmaß der olefinischen Doppelbindungen im Fettalkoholmolekül bestimmt bekanntlich den Erstarrungsbereich des jeweiligen Wertstoffgutes. Erfindungsgemäß sind entsprechende Fettalkohole bzw. Fettalkoholgemische bevorzugt, die Erstarrungsbereiche unterhalb 20 bis 25°C und insbesondere entsprechende Erstarrungswerte im Bereich gleich/kleiner 10 bis 15°C aufweisen.

Es hat sich als vorteilhaft erwiesen, die oben genannten Fettalkohole in Abmischung mit Partialestern von gesättigten und insbesondere wenigstens anteilsweise olefinisch ungesättigten Fettsäuren mit mehrfunktionellen Alkoholen mit 2 bis 6 C-Atomen und insbesondere 3 bis 5 C-Atomen als Schaumbremse/Entschäumer einzusetzen. So können insbesondere Glycerinpartialester von Fettsäuren natürlichen Ursprungs wichtige Mischungskomponenten für die Abmischung mit entsprechenden Fettalkoholen sein, wobei etwa gleiche Mengen an Fettalkohol und Fettsäurepartialester oder aber entsprechende Stoffgemische mit einem mehrfachen des Partialesters, bezogen auf den Fettalkohol, bevorzugte Stoffgemische sind. Eine besonders bevorzugte Mischungskomponente ist das Glycerinmonooleat. Geeignete Abmischungen von Fettalkohol zu Fettsäurepartialglycerid liegen beispielsweise im Bereich von etwa 1:1 bis 1:10, vorzugsweise 1:1 bis 1:5 und insbesondere von etwa 1:1 bis 1:3 Gewichtsteilen.

Neben den oben beschriebenen ungesättigten Fettalkoholen sind auch olefinisch ungesättigte Terpenalkohole als Schaumbremse/Entschäumer geeignet. Bei den Terpenalkoholen handelt es sich um acyclische oder mono-, bi- oder tricyclische, mehrfach olefinisch ungesättigte Alkohole pflanzlichen Ursprungs, die zwischen 10 und 40 Kohlenstoffatomen enthalten. Die Terpenalkohole werden vorzugsweise in Form ihrer natürlich anfallenden Mischungen als Schaumbremse/Entschäumer eingesetzt. Besonders bevorzugt ist das sogenannte Pine Oil, eine Mischung verschiedener Terpinole wie α- und β-Terpineol, α-Fenchylalkohol, Borneol und Isoborneol wie im Römpp Chemielexikon, Seite 3451, Band 4, 9. Auflage, 1991, beschrieben. Daneben enthält Pine Oil noch in untergeordneten Mengen andere nicht alkoholische Verbindungen, z. B. Campher, Anethol oder Estragol. Das Pine Oil wird aus harzhaltigen Stubben und dem Wurzelholz verschiedener Kiefernarten durch Extraktion mit Benzin oder Chloroform und nachfolgender fraktionierter Destillation gewonnen.

Die Entschäumerkomponente liegt üblicherweise in geringeren Mengen - bezogen auf Aktivsubstanz - als die APG-Komponente vor. Es sind dabei Abmischungen bevorzugt, in denen der Entschäumer in deutlich geringeren Mengen zum Einsatz kommt. So sind Mehrstoffkonzentrate im erfindungsgemäßen Sinne bevorzugt, deren Entschäumergehalt im Bereich von etwa 10 bis 25 Gew.-% und vorzugsweise im Bereich von etwa 15 bis 20 Gew.-% liegt.

Die als Viskositätsregler zum Einsatz kommenden niederen wasserlöslichen monofunktionellen Alkohole sind Verbindungen des Bereichs von C₁₋₄, wobei dem Ethanol als Viskositätsregler die wichtigste Rolle zukommt. Der Viskositätsregler wird in seiner Einsatzmenge durch die beiden zuvor genannten Komponenten nach Art und Menge und die im Mehrstoffgemisch insgesamt vorliegende Wassermenge bestimmt. Besonders geeignet sind Zusatzmengen des Viskositätsreglers, bevorzugt auf Basis Ethanol, im Bereich von wenigstens etwa 5 bis 7 Gew.-% als Untergrenze und 12 bis 25 Gew.-% als Obergrenze. Ethanolmengen im Bereich von etwa 5 bis 20 Gew.-% ergeben im allgemeinen hinreichende Viskositätsbeeinflussungen im Sinne der erfindungsgemäß angestrebten Fließ- und Gießfähigkeit des Mehrkomponentengemisches auch schon im Bereich der Raumtemperatur.

Der Wassergehalt der erfindungsgemäßen Mehrstoffkonzentrate ist in der Regel höchstens etwa 50 Gew.-%, liegt in bevorzugten Ausführungsformen jedoch bei niedrigeren Werten. So sind für den Wassergehalt des Mehrkomponentengemisches Bereiche von etwa 30 bis 45 Gew.-% und insbesondere der Bereich von etwa 35 bis 40 Gew.-% besonders geeignet.

Die erfindungsgemäß definierten Netzhilfekonzentrate können schon bei Zusatz sehr geringer Mengen von beispielsweise 0,1 Gew.-% - bezogen auf das zur Bewässerung eingesetzte Gesamtwasser - die angestebten Effekte der gleichmäßigen Durchnetzung des Pflanzengutes auch in seinem gesamten Wurzelbereich mit der wäßrigen Phase auslösen. Bevorzugte Einsatzmengen für die zuvor definierten Netzhilfekonzentrate in dem zur Bewässerung eingesetzten Wasser liegen im Bereich von 0,1 bis 5 Gew.-% und insbesondere im Bereich von etwa 0,5 bis 2 Gew.-% - jeweils bezogen auf gesamte wäßrige Phase.

Die Erfindung macht in einer weiteren Ausführungsform Gebrauch von dieser Netzhilfe auch zur Intensivierung des Eintrags von Nährstoffen und/oder Schutzstoffen wie Herbiziden und/oder Fungiziden zur Förderung und zum Schutz des Pflanzenwachstums. Diese zusätzlichen Hilfsstoffe können in an sich bekannter Weise in Form wäßriger Lösungen, Emulsionen und/oder Dispersionen aufgebracht werden, wobei dann im Sinne der erfindungsgemäßen Lehre Netzhilfen der angegebenen Art mitverwendet werden.

### Beispiel

Als schaumarmes Tensidkonzentrat im Sinne der erfindungsgemäßen Lehre kommt eine Abmischung der folgenden Komponenten zum Einsatz (Gew.-%-Angaben jeweils bezogen auf das Gesamtgewicht des noch unverdünnten Wertstoffkonzentrats): ca. 45 Gew.-% der tensidischen Komponente auf APG-Basis, ca. 20 Gew.-% des hochungesättigten Fettalkohols, ca. 12 Gew.-% Ethanol, zum Rest Wasser.

Bei der zum Einsatz kommenden APG-Verbindung handelt es sich um das unter dem Handelsnamen "APG 220 UP" von der Anmelderin vertriebene APG-Produkt, in dem sich der Alkylrest zum weitaus überwiegenden Anteil von einem C₁₀-Fettalkohol natürlichen Ursprungs ableitet (Gehalt an Aktivsubstanz ca. 65%). Der als Schaumbremse/Entschäumer eingesetzte Fettalkohol ist das von der Anmelderin unter dem Handelsnamen "HD Ocenol 80/85" vertriebene Produkt. Hierbei handelt es sich um einen olefinisch ungesättigten Fettalkohol natürlichen Ursprungs des weitaus überwiegenden Bereichs C_{16/18}, mit einer Hydroxylzahl von 205 bis 215, einer Jodzahl von 84 bis 89 und einem Erstarrungsbereich von 6 bis 14°C.

Die Austestung dieser Netzhilfe im praktischen Einsatz wird wie folgt vorgenommen:

Ein Rasenstück mit ausgedehnten Trockenstellen wurde in zwei etwa gleich große Teilstücke mit vergleichbaren Schadbildem eingeteilt. Die Flächen hatten dabei die folgenden Maße:
Versuchsfläche A: 25 m x 16,5 m = 412,5 m²
Versuchsfläche B: 24 m x 17,5 m = 420 m²

Beide Flächen wurden während der gesamten Versuchsdauer je nach der natürlichen Regenfallmenge in gleicher Weise ausreichend künstlich bewässert. Dabei wurde die Fläche A ohne weitere Zusätze zum künstlich aufgetragenen Wasser bewässert. Bei Fläche B wurden zu Versuchsbeginn mit dem aufgetragenen künstlichen Beregnungswasser 250 ml Netzmittel pro 100 m² aufgebracht.

Eine analoge Behandlung wurde nach 3 Wochen und nochmals nach weiteren 4 Wochen bei der Versuchsfläche B vorgenommen.

### Die Begutachtung der beiden Flächen nach 10 Wochen ergab das folgende Bild:

### Fläche A:

Keine Veränderung des Schadbildes; keine Änderung der Trockenfleckenausdehnung.

### Fläche B:

Reduktion der Trockenfleckenausdehnung um 80%. Gute Erholung des Pflanzenwachstums in den regenerierten Fleckenanteilen.

## Patentansprüche

1. Schaumarme Netzhilfe in der Angebotsform eines hochkonzentrierten, gleichwohl fließ- und gießfähigen wäßrigen Konzentrats auf Tensidbasis zur Intensivierung des Eindringens und Spreitens von Wasser im Bereich der Pflanzenverwurzelung bei deren Bewässerung, enthaltend als ökologisch verträgliche Tensidkomponente Alkyl(poly)glykosidverbindungen vom O/W-Typ (APG-Verbindungen), olefinisch ungesättigte Alkohole, gegebenenfalls in Abmischung mit Partialestern von Fettsäuren mit mehrfunktionellen Alkoholen als Schaumbremse/Entschäumer und C₁₋₄ wasserlösliche monofunktionelle Alkohole als Viskositätsregler.

2. Netzhilfekonzentrat nach Anspruch 1, **dadurch gekennzeichnet, daß** es APG-Tenside auf Basis wenigstens weitgehend gesättigter C₈₋₁₄-Vorlauf-Fettalkohole, insbesondere auf Basis überwiegend C_{8/10}-Fettalkohol enthält.

3. Netzhilfekonzentrat nach Ansprüchen 1 und 2, **dadurch gekennzeichnet, daß** sein APG-Gehalt (wasserfreie Aktivsubstanz) im Bereich von 20 bis 35 Gew.-%, vorzugsweise im Bereich von 25 bis 30 Gew.-%, liegt.

4. Netzhilfekonzentrat nach Ansprüchen 1 bis 3, **dadurch gekennzeichnet, daß** als Schaumbremse/Entschäumer olefinisch ungesättigte C₁₂₋₂₄-Fettalkohole natürlichen Ursprungs, insbesondere wenigstens überwiegend C_{16/18}-Fettalkohole mit hohem Grad olefinischer Doppelbindungen und Erstarrungsbereichen unterhalb 20°C, vorzugsweise gleich/kleiner 10 bis 15°C, vorliegen.

5. Netzhilfekonzentrat nach Ansprüchen 1 bis 4, **dadurch gekennzeichnet, daß** als Schaumbremse/Entschäumer olefinisch ungesättigte C₁₂₋₂₄-Fettalkohole in Abmischung mit Partialestern von gesättigten und insbesondere wenigstens anteilsweise olefinisch ungesättigten Fettsäuren mit mehrfunktionellen Alkoholen mit 2 bis 6 C-Atomen und insbesondere 3 bis 5 C-Atomen vorliegen.

6. Netzhilfekonzentrat nach Anspruch 5, **dadurch gekennzeichnet, daß** als Partialester Glycerinmonooleat vorliegt.

7. Netzhilfekonzentrat nach Anspruch 5 oder 6, **dadurch gekennzeichnet, daß** das Mengenverhältnis zwischen Fettalkoholen und Partialestern zwischen 1 : 1 bis 1 : 10 und vorzugsweise 1 : 1 bis 1 : 5 beträgt.

8. Netzhilfekonzentrat nach Ansprüchen 1 bis 7, **dadurch gekennzeichnet, daß** als Schaumbremse/Entschäumer olefinisch ungesättigte Terpenalkohole vorliegen.

9. Netzhilfekonzentrat nach Ansprüchen 1 bis 8, **dadurch gekennzeichnet, daß** die Schaumbremse/Entschäumer in Mengen von 10 bis 25 Gew.-%, vorzugsweise im Bereich von 15 bis 20 Gew.-%, im Konzentrat vorliegen.

10. Netzhilfekonzentrat nach Ansprüchen 1 bis 9, **dadurch gekennzeichnet, daß** die Viskositätsregler in Mengen von 5 bis 25 Gew.-% eingemischt sind.

11. Netzhilfekonzentrat nach Ansprüchen 1 bis 10, **dadurch gekennzeichnet, daß** als Viskositätsregler Ethanol vorliegt, das bevorzugt in Mengen von 5 bis 20 Gew.-% eingemischt ist.

12. Netzhilfekonzentrat nach Ansprüchen 1 bis 11, **dadurch gekennzeichnet, daß** sein Wassergehalt gleich/kleiner 50 Gew.-% beträgt und vorzugsweise im Bereich von 30 bis 45 Gew.-%, insbesondere bei 35 bis 40 Gew.-%, liegt.

13. Anwendung des Netzhilfekonzentrats nach Ansprüchen 1 bis 12 in Mengen von 0,1 bis 5 Gew.-%, vorzugsweise von 0,5 bis 2 Gew.-%, in dem zur Pflanzenbewässerung eingesetzten Wasser.

14. Anwendung des Netzhilfekonzentrats nach Ansprüchen 1 bis 12 zur Intensivierung des Eintrags von Nährstoffen und/oder Schutzstoffen, wie Herbiziden und/oder Fungiziden, für das Pflanzenwachstum in der Form wäßriger Lösungen, Emulsionen und/oder Dispersionen.

## Claims

1. A low-foam wetting aid in the form of a highly concentrated but free-flowing and pourable water-containing surfactant-based concentrate for intensifying the penetration and spreading of water around the roots of plants during watering, **characterized in that** it contains alkyl(poly)glycoside compounds of the o/w type (APG compounds) as an ecologically safe surfactant component, olefinically unsaturated alcohols, optionally in admixture with partial esters of fatty acids with polyhydric alcohols, as foam suppressors/defoamers and water-soluble monohydric C₁₋₄ alcohols as viscosity adjusters.

2. A wetting aid concentrate as claimed in claim 1, **characterized in that** it contains APG surfactants based on at least substantially saturated C₈₋₁₄ head-fractionated fatty alcohols, more particularly based on predominantly C_{8/10} fatty alcohol.

3. A wetting aid concentrate as claimed in claims 1 and 2, **characterized in that** its APG content (water-free active substance) is in the range from 20 to 35% by weight and preferably in the range from 25 to 30% by weight.

4. A wetting aid concentrate as claimed in claims 1 to 3, **characterized in that** it contains olefinically unsaturated C₁₂₋₂₄ fatty alcohols of natural origin, more particularly at least predominantly C_{16/18} fatty alcohols with a high proportion of olefinic double bonds and solidification ranges below 20°C, preferably in the range from, or below, 10 to 15°C, as foam suppressors/defoamers.

5. A wetting aid concentrate as claimed in claims 1 to 4, **characterized in that** it contains olefinically unsaturated C₁₂₋₂₄ fatty alcohols in admixture with partial esters of saturated and, in particular, at least partly olefinically unsaturated fatty acids with polyhydric alcohols containing 2 to 6 carbon atoms and, more particularly, 3 to 5 carbon atoms as foam suppressors/defoamers.

6. A wetting aid concentrate as claimed in claim 5, **characterized in that** it contains glycerol monooleate as the partial ester.

7. A wetting aid concentrate as claimed in claim 5 or 6, **characterized in that** the quantity ratio of fatty alcohols to partial esters is 1:1 to 1:10 and preferably 1:1 to 1:5.

8. A wetting aid concentrate as claimed in claims 1 to 7, **characterized in that** it contains olefinically unsaturated terpene alcohols as foam suppressors/defoamers.

9. A wetting aid concentrate as claimed in claims 1 to 8, **characterized in that** it contains the foam suppressors/defoamers in quantities of 10 to 25% by weight and preferably in quantities of 15 to 20% by weight.

10. A wetting aid concentrate as claimed in claims 1 to 9, **characterized in that** the viscosity adjusters are incorporated in quantities of 5 to 25% by weight, as viscosity adjusters.

11. A wetting aid concentrate as claimed in claims 1 to 10, **characterized in that** it contains ethanol, preferably in a quantity of 5 to 20% by weight, as the viscosity adjuster.

12. A wetting aid concentrate as claimed in claims 1 to 11, **characterized in that** its water content is 50% by weight or less, preferably 30 to 45% by weight and more preferably 35 to 40% by weight.

13. The use of the wetting aid concentrate claimed in claims 1 to 12 in quantities of 0.1 to 5% by weight and preferably in quantities of 0.5 to 2% by weight in the water used to water the plants.

14. The use of the wetting aid concentrate claimed in claims 1 to 12 for intensifying the input of nutrients and/or protection agents, such as herbicides and/or fungicides, for plant growth in the form of aqueous solutions, emulsions and/or dispersions.

## Revendications

1. Adjuvant de mouillage à faible pouvoir moussant, présenté sous forme d'un concentré aqueux à base de tensioactifs, très concentré mais apte à l'écoulement et pouvant être versé, pour l'intensification de la pénétration et de l'étalement de l'eau dans la zone de l'enracinement de plantes lors de l'arrosage, contenant en tant que composant tensioactif écologiquement acceptable des alkyl(poly)glycosides du type H/E (composés APG), des alcools à insaturation oléfinique, éventuellement en mélange avec des esters partiels d'acides gras avec des alcools polyfonctionnels en tant qu'antimousses/ralentisseurs de formation de mousse et des alcools monofonctionnels en C₁₋₄ solubles dans l'eau, en tant que régulateurs de viscosité.

2. Concentré d'adjuvant de mouillage selon la revendication 1,
**caractérisé en ce qu'**
il contient des tensioactifs APG à base au moins dans une large mesure d'alcools gras de fraction de tête en C₈₋₁₄, en particulier à base d'alcool gras essentiellement en C₈₋₁₀.

3. Concentré d'adjuvant de mouillage selon la revendication 1 ou 2,
**caractérisé en ce que**
sa teneur en APG (substance active anhydre) se situe dans la plage allant de 20 à 35 % en poids, de préférence, dans la plage allant de 25 à 30 % en poids.

4. Concentré d'adjuvant de mouillage selon les revendications 1 à 3,
**caractérisé en ce que**
des alcools gras en C₁₂₋₂₄ à insaturation oléfinique, d'origine naturelle, en particulier des alcools gras au moins essentiellement en C₁₆₋₁₈, à haut degré de doubles liaisons oléfiniques et à domaines de solidification inférieurs à 20°C, de préférence ≤ 10 à 15°C, sont présents en tant qu'antimousses/ralentisseurs de formation de mousse.

5. Concentré d'adjuvant de mouillage selon les revendications 1 à 4,
**caractérisé en ce que**
des alcools gras en C₁₂₋₂₄ à insaturation oléfinique, en mélange avec des esters partiels d'acides gras saturés et en particulier au moins en partie à insaturation oléfinique, avec des alcools monofonctionnels ayant de 2 à 6 atomes de carbone, et en particulier de 3 à 5 atomes de carbone, sont présents en tant qu'antimousses/ralentisseurs de formation de mousse.

6. Concentré d'adjuvant de mouillage selon la revendication 5,
**caractérisé en ce qu'**
il se trouve sous forme d'ester partiel monooléate de glycérol.

7. Concentré d'adjuvant de mouillage selon la revendication 5 ou 6,
**caractérisé en ce que**
le rapport quantitatif entre alcools gras et esters partiels est compris entre 1:1 et 1:10, et de préférence entre 1:1 et 1:5.

8. Concentré d'adjuvant de mouillage selon les revendications 1 à 7,
**caractérisé en ce que**
des alcools terpéniques à insaturation oléfinique sont présents en tant qu'antimousses/ralentisseurs de formation de mousse.

9. Concentré d'adjuvant de mouillage selon les revendications 1 à 8,
**caractérisé en ce que**
les antimousses/ralentisseurs de formation de mousse sont présents dans le concentré en quantités de 10 à 25% en poids, de préférence dans la plage de 15 à 20 % en poids.

10. Concentré d'adjuvant de mouillage selon les revendications 1 à 9,
**caractérisé en ce que**
les régulateurs de viscosité sont incorporés en quantités de 5 à 25 % en poids.

11. Concentré d'adjuvant de mouillage selon les revendications 1 à 10,
**caractérisé en ce que**
en tant que régulateur de viscosité est présent l'éthanol, qui est incorporé de préférence en quantités de 5 à 20 % en poids.

12. Concentré d'adjuvant de mouillage selon les revendications 1 à 11,
**caractérisé en ce que**
sa teneur en eau est ≤ 50 % en poids et, de préférence, se situe dans la plage allant de 30 à 45 % en poids, en particulier, de 35 à 40 % en poids.

13. Utilisation du concentré d'adjuvant de mouillage selon les revendications 1 à 12, en quantités de 0,1 à 5 % en poids, de préférence, de 0,5 à 2 % en poids, dans l'eau utilisée pour l'arrosage de plantes.

14. Utilisation du concentré d'adjuvant de mouillage selon les revendications 1 à 12, pour intensifier l'introduction de substances nutritives et/ou de substances protectrices, telles que des herbicides et/ou des fongicides, pour la croissance de plantes, sous la forme de dispersions, émulsions et/ou solutions aqueuses.
